# EUROPEAN PATENT APPLICATION

(11) **EP 3 531 614 A1**
(43) Date of publication of application: **28.08.2019**
(21) Application number: 17870453.2
(22) Date of filing: 24.05.2017
(51) Int. Cl.: H04L 9/08

(54) **ENCRYPTION AND DECRYPTION METHOD AND DEVICE**

(30) Priority: 11.11.2016 CN 201611001858
(71) Applicant: Huawei Technologies Co., Ltd., Longgang District Shenzhen, Guangdong 518129 (CN)
(72) Inventor: SU, Changzheng, Shenzhen Guangdong 518129 (CN); LU, Jiansong, Shenzhen Guangdong 518129 (CN); XIAO, Xinhua, Shenzhen Guangdong 518129 (CN)
(74) Representative: Gill Jennings & Every LLP
(86) International application number: PCT/CN2017/085783
(87) International publication number: WO 2018/086333

(57) **Abstract**

An encryption method and device and a decryption method and device are provided, to resolve a problem that unconditional security of encrypted service data cannot be ensured in an existing service data encryption process and encryption processing of highly confidential service data cannot be implemented. The encryption device in the present invention obtains a quantum key and to-be-encrypted service data; encrypts the to-be-encrypted service data by using the quantum key, to generate a ciphertext; inserts the ciphertext into a specified byte in an OTN overhead byte, and performs encapsulation to obtain an OTN frame including the ciphertext; and converts the OTN frame from an electrical signal to an optical signal, and transmits the optical signal to a second OTN device. The service data is encrypted by using the quantum key, and therefore unconditional security of service data transmission can be ensured. In addition, the ciphertext is inserted into the specified byte in the OTN overhead byte, and therefore encryption processing of a highly confidential service can be implemented.

## Description

This application claims priority to Chinese Patent Application No. 201611001858.5, filed with the Chinese Patent Office on November 11, 2016 and entitled "ENCRYPTION METHOD AND DEVICE AND DECRYPTION METHOD AND DEVICE", which is incorporated herein by reference in its entirety.

### TECHNICAL FIELD

The present invention relates to the quantum communications field, and in particular, to an encryption method and device and a decryption method and device.

### BACKGROUND

With rapid development of network technologies, a large amount of sensitive information needs to be transmitted by using a network, and people need to protect the sensitive information from being lost or attacked. Encryption is one of the important means for information security assurance. An existing classical encryption system is established based on computational complexity, and is possibly deciphered. In a classical cryptosystem, only a one-time pad can achieve unconditional security, and how to generate a large quantity of random number keys is a difficult problem all the time. A quantum key distribution (Quantum Key Distribution, QKD) technology resolves this difficult problem.

In QKD, quantum state information is specifically used as an information unit, and some quantum mechanical principles are used to transmit and protect information. Generally, both communication sides use quantum state information as an information carrier to establish a shared key between both the secret communication sides through quantum channel transmission by using a quantum mechanical principle. QKD security is ensured by the "Heisenberg uncertainty principle" and the "quantum no-cloning theorem" in quantum mechanics or coherence, non-locality, and other quantum characteristics of entangled particles.

In 2012, CISCO in America had applied for a patent of timeslot encryption in an optical transport network, and a corresponding Chinese Patent Application Publication NO. is CN104718720A. This patent application provided the following encryption solution:

An optical transport network (Optical Transport Network, OTN) frame includes an optical channel payload unit (Optical Channel Payload Unit, OPU) divided into a plurality of timeslots; and the OTN frame is received at a transmit end. The timeslots are grouped into a plurality of timeslot blocks, two or more timeslot blocks are selected to be encrypted, and encryption and authentication are concurrently performed to generate an encrypted OTN frame, where only some timeslot blocks in the encrypted OTN frame are encrypted.

A minimum unit of the optical channel payload unit is an ODUO, and an OTN device can only use the minimum unit as a whole to perform encryption and decryption processing, where an ODU0 rate is 1.25 Gbp/s. The data rate is very high and a continuous transmission service is performed, and the data rate is far higher than a rate at which an existing quantum key distribution system can generate a key. Therefore, to encrypt the optical channel payload unit, only a conventional encryption method can be selected. As a result, unconditional security of encrypted service data cannot be ensured, and encryption processing of highly confidential service data cannot be implemented.

### SUMMARY

Embodiments of the present invention provide an encryption method and device and a decryption method and device, to resolve a problem that unconditional security of encrypted service data of the service data cannot be ensured in an existing service data encryption process and encryption processing of highly confidential service data cannot be implemented.

Specific technical solutions provided in the embodiments of the present invention are as follows:
According to a first aspect, an embodiment of the present invention provides an encryption device, where the encryption device includes:
an interface unit, configured to obtain a quantum key and to-be-encrypted service data;
an encryption unit, configured to encrypt the to-be-encrypted service data by using the quantum key, to generate a ciphertext;
an optical transport network OTN processor, configured to insert the ciphertext into a specified byte in an OTN overhead byte, and perform encapsulation to obtain an OTN frame including the ciphertext; and
an electro-optic conversion module, configured to convert the OTN frame from an electrical signal to an optical signal, and transmit the optical signal to a receiving device.

In this way, in a service data encryption process, the to-be-encrypted service data can be encrypted by using the obtained quantum key, to generate the ciphertext; the ciphertext is inserted into the specified byte in the OTN overhead byte; encapsulation is performed to obtain the OTN frame including the ciphertext; and the OTN frame is transmitted after having undergone electro-optic conversion. The to-be-encrypted service data is encrypted by using the quantum key, and therefore security of service data transmission is ensured. Further, the ciphertext is encapsulated in the specified byte in the OTN overhead byte, and therefore encryption transmission of a highly confidential service can be implemented.

In a possible design, the encryption unit is specifically configured to encrypt the to-be-encrypted service data by using a one-time-pad encryption algorithm and the quantum key, to generate the ciphertext.

In this design, the directly obtained quantum key is used to encrypt the service data. Under a premise that data transmission security is ensured, this solution is simple, and is easy to implement.

In a possible design, the encryption unit includes a one-time-pad encryption unit and a key generation unit, where
the key generation unit is configured to perform code extension processing on the quantum key to generate a new key, or perform reuse processing on the quantum key to generate a new key; and
the one-time-pad encryption unit is configured to encrypt the to-be-encrypted service data by using a one-time-pad encryption algorithm and the new key, to generate the ciphertext.

In this design, code extension processing and reuse processing are performed on the obtained quantum key, and the service data is encrypted, so that more service data can be encrypted.

In a possible design, the specified byte in the OTN overhead byte is a specified byte in an optical channel payload unit OPU overhead byte, a specified byte in an optical channel data unit ODU overhead byte, or a specified byte in an optical channel data unit OTU overhead byte.

In this design, as long as a requirement that the specified byte in the OTN overhead byte is a specified byte in the OPU overhead byte, a specified byte in the ODU overhead byte, or a specified byte in the OTU overhead byte is satisfied, encryption transmission of the ciphertext can be implemented easily.

In a possible design, the specified byte in the ODU overhead byte is a general communication channel byte in the ODU overhead byte; and the specified byte in the OTU overhead byte is a general communication channel byte in the OTU overhead byte.

In this design, a general communication channel byte that is in an OTN overhead and that is used to transfer general communication information is designed as a specified byte in the ODU overhead byte or a specified byte in the OTU overhead byte. In an actual OTN device, all these general communication channel bytes are usually reserved and unused, and therefore high-speed service data transmission can be ensured, and a high speed and security of ciphertext transmission can also be ensured without affecting functional transmission of an original byte in the OTN frame.

In a possible design, the specified byte in the ODU overhead byte is a GCC 1 byte and a GCC2 byte, and the specified byte in the OTU overhead byte is a GCC0 byte.

In a possible design, the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame.

In a possible design, the specified byte in the OTN overhead byte is a reserved byte of the OPU overhead byte, the ODU overhead byte, or the OTU overhead byte, and the reserved byte is an RES byte.

In this design, the reserved byte of the OPU overhead byte, the ODU overhead byte, or the OTU overhead byte is designed as a reserved byte. Because a reserved byte in an OTN device is also a reserved and unused overhead byte, secure ciphertext transmission can be implemented by using this design.

In a possible design, the OTN processor includes an OTU processing unit, configured to insert the ciphertext into the specified byte in the OPU overhead byte, the specified byte in the ODU overhead byte, or the specified byte in the OTU overhead byte, and perform encapsulation to obtain the OTN frame including the ciphertext.

In a possible design, the OTN processor includes an OTU processing unit and an ODU processing unit, where
the ODU processing unit is configured to insert the ciphertext into the specified byte in the ODU overhead byte or the specified byte in the OPU overhead byte, and output an obtained ODU unit to the OTU processing unit; and
the OTU processing unit is configured to encapsulate the ODU unit into the OTN frame including the ciphertext.

In a possible design, the OTN processor includes an OTU processing unit, an ODU processing unit, and an OPU processing unit, where
the OPU processing unit is configured to insert the ciphertext into the specified byte in the OPU overhead byte, and output an obtained OPU unit to the ODU processing unit;
the ODU processing unit is configured to perform processing on the OPU unit to obtain an ODU unit, and output the ODU unit to the OTU processing unit; and
the OTU processing unit is configured to encapsulate the ODU unit into the OTN frame including the ciphertext.

According to a second aspect, an embodiment of the present invention provides an encryption method, where the encryption method includes:
obtaining, by a first optical transport network OTN device, a quantum key and to-be-encrypted service data;
encrypting the to-be-encrypted service data by using the quantum key, to generate a ciphertext;
inserting the ciphertext into a specified byte in an OTN overhead byte, and performing encapsulation to obtain an OTN frame comprising the ciphertext; and
converting the OTN frame from an electrical signal to an optical signal, and transmitting the optical signal to a second OTN device.

In a possible design, the encrypting the to-be-encrypted service data by using the quantum key, to generate a ciphertext includes:
encrypting the to-be-encrypted service data by using a one-time-pad encryption algorithm and the quantum key, to generate the ciphertext;
performing code extension processing on the quantum key to generate a new key, and encrypting the to-be-encrypted service data by using a one-time-pad encryption algorithm and the new key, to generate the ciphertext; or
performing reuse processing on the quantum key to generate a new key, and encrypting the to-be-encrypted service data by using a one-time-pad encryption algorithm and the new key, to generate the ciphertext.

In a possible design, the specified byte in the OTN overhead byte is a specified byte in an optical channel payload unit OPU overhead byte, a specified byte in an optical channel data unit ODU overhead byte, or a specified byte in an optical channel data unit OTU overhead byte.

In a possible design, the specified byte in the ODU overhead byte is a general communication channel byte in the ODU overhead byte; and the specified byte in the OTU overhead byte is a general communication channel byte in the OTU overhead byte.

In a possible design, the specified byte in the ODU overhead byte is a GCC1 byte and a GCC2 byte, and the specified byte in the OTU overhead byte is a GCC0 byte.

In a possible design, the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame.

In a possible design, the specified byte in the OTN overhead byte is a reserved byte of the OPU overhead byte, the ODU overhead byte, or the OTU overhead byte, and the reserved byte is an RES byte.

According to a third aspect, an embodiment of the present invention provides a decryption method, where the decryption method includes:
receiving, by a second optical transport network OTN device, an optical signal that includes a ciphertext and that is sent by a first OTN device;
converting the optical signal to an electrical signal to obtain an OTN frame including the ciphertext;
extracting the ciphertext from a specified byte in an OTN overhead byte of the OTN frame; and
performing decryption processing on the extracted ciphertext by using an encryption algorithm and a quantum key that are obtained by the first OTN device, to obtain service data that has not undergone encryption processing.

According to a fourth aspect, an embodiment of the present invention provides a decryption device, where the decryption device includes:
an interface unit, configured to receive an optical signal that includes a ciphertext and that is sent by a sending device;
an optic-electro conversion module, configured to convert the optical signal to an electrical signal to obtain an optical transport network OTN frame including the ciphertext;
an OTN processor, configured to extract the ciphertext from a specified byte in an OTN overhead byte of the OTN frame, and output the ciphertext to a decryption unit; and
the decryption unit, configured to perform decryption processing on the extracted ciphertext by using an encryption algorithm and a quantum key that are obtained by the sending device, to obtain service data that has not undergone encryption processing.

According to a fifth aspect, an embodiment of the present invention provides a computer storage medium, configured to store a computer software instruction used by the first OTN device in the foregoing first aspect, where the computer software instruction includes a program designed to execute the foregoing aspects.

In the embodiments of the present invention, the encryption device can encrypt the to-be-encrypted service data by using the obtained quantum key, to generate the ciphertext; insert the ciphertext into the specified byte in the OTN overhead byte; perform encapsulation to obtain the OTN frame including the ciphertext; and perform electro-optic conversion on the OTN frame, and transmit the OTN frame having undergone electro-optic conversion. The to-be-encrypted service data is encrypted by using the quantum key, and therefore security of service data transmission is ensured. Further, the ciphertext is encapsulated in the specified byte in the OTN overhead byte, and therefore encryption transmission of a highly confidential service can be implemented.

### BRIEF DESCRIPTION OF DRAWINGS

FIG. 1 is a schematic diagram of a network architecture of an OTN secure transport network;
FIG. 2 is a schematic diagram of logical functions of service processing of a general OTN device;
FIG. 3 is a schematic diagram of a frame structure of an OTN frame;
FIG. 4 is a schematic location diagram of an OTN overhead byte in an OTN frame;
FIG. 5A, FIG. 5B, FIG. 5C, and FIG. 5D are schematic structural diagrams of an encryption device in an embodiment of the present invention;
FIG. 6 is a schematic structural diagram of a decryption device in an embodiment of the present invention;
FIG. 7A1-1, FIG. 7A1-2, FIG. 7B, and FIG. 7C are schematic diagrams of encryption and decryption processes implemented by an encryption/decryption system in an embodiment of the present invention;
FIG. 8 is a flowchart of an encryption method in an embodiment of the present invention; and
FIG. 9 is a flowchart of a decryption method in an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

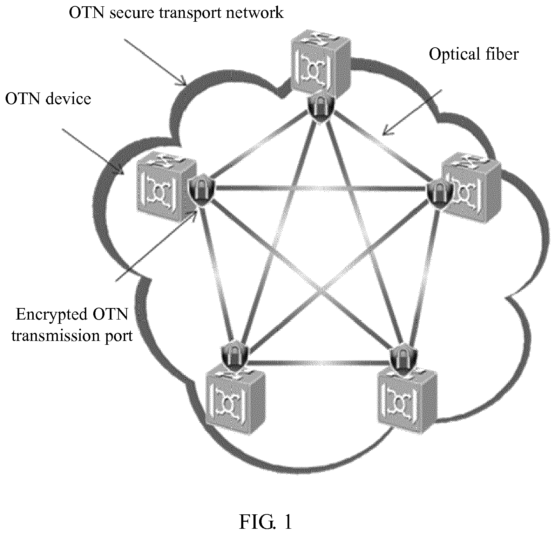

FIG. 1 is a schematic diagram of a network architecture of an OTN secure transport network. It can be seen from FIG. 1 that, the OTN secure transport network includes a plurality of OTN devices, where each OTN device includes one or more encrypted optical transport units (Optical Channel Transport Unit, OTU), and ports of these OTUs are connected together by using an optical fiber and/or another optical functional OTN device.

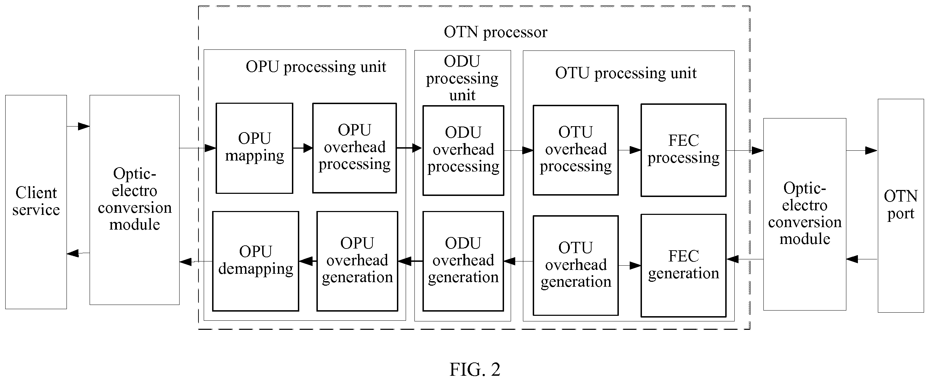

Main functions of the OTN device include performing optic-electro conversion on service data input by a client, and mapping converted-to service data to different OPU units through OPU mapping; inserting an OPU overhead and an ODU overhead, and performing OTU overhead processing; inserting processed service data into different optical transport units; and finally performing electro-optic conversion, and transmitting converted-to service data to another OTN device through an optical fiber. FIG. 2 is a schematic diagram of logical functions of service processing of a general OTN device. An OPU processing unit, an ODU processing unit, and an OTU processing unit that are in FIG. 2 are division of logical functions. In an actual device, the three logical functional units are usually integrated into a chip, and such a chip is referred to as an OTN processor.

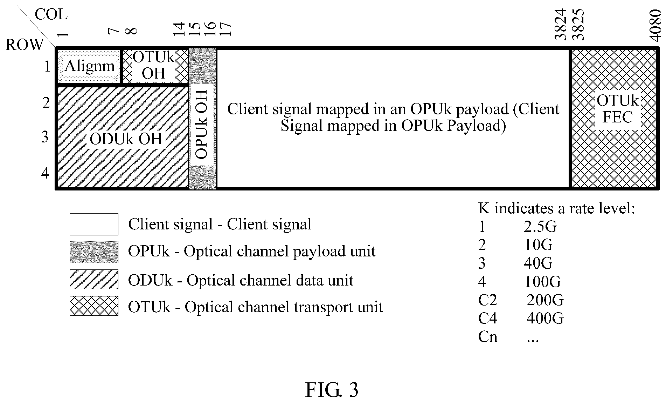

A frame structure of an OTN frame defined in the ITU-T G.709 is shown in FIG. 3, and specifically includes the following three areas:
(1) an optical channel payload unit (OPUk), which can implement a function of mapping a client signal to a fixed frame structure (digital wrapping), where the frame structure of the signal includes but is not limited to various formats such as a synchronous transport module level N (Synchronous Transport Module level N, STM-N), an Internet Protocol (Internet Protocol, IP) packet, an asynchronous transfer mode (Asynchronous Transfer Mode, ATM) cell, and an Ethernet frame;
(2) an optical channel data unit (ODUk), which can provide functions such as connectivity not related to a signal and connection protection and monitoring, where this layer is also referred to as a data channel layer; and
(3) an optical channel transport unit (OTUk), which can provide functions such as forward error correction (Forward Error Correction, FEC) and optical section protection and monitoring, where this layer is also referred to as a digital section layer.

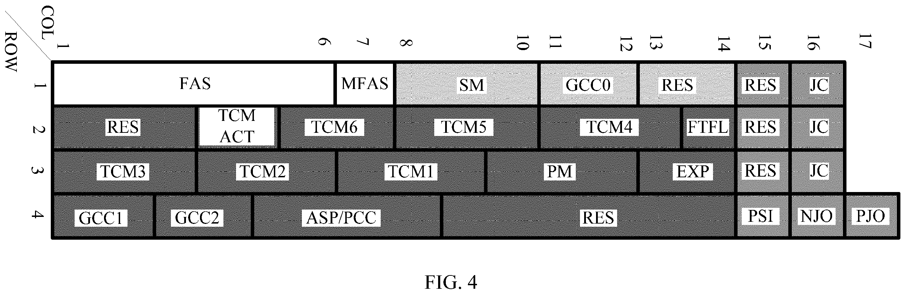

An OTN overhead in the OTN frame includes three types: an OTU overhead, an OPU overhead, and an ODU overhead. A specific overhead byte is shown in FIG. 4, and includes:
an FAS byte: which is a frame alignment unit byte and is located in the first column to the sixth column of the first row;
an MFAS byte: which is a multiframe alignment unit byte, is located in the sixth column to the eighth column of the first row, and supports a multiframe formed by a maximum of 256 frames;
an SM byte: which is a section monitoring byte and is located in the eighth column to the tenth bytes of the first row;
a GCC0/GCC1/GCC2 byte: which is a special general communication channel byte provided for an OTN;
an RES byte: which is a reserved byte;
a TCM ACT byte: which is a byte used for activation and deactivation of connection monitoring;
a TCM1 byte to a TCM6 byte: which are bytes used for connection monitoring of six layers;
an FTFL byte: which is a byte used for fault type and fault locating;
a PM byte: which is a byte used for channel monitoring;
an EXP byte: which is a byte used for experiment;
an APS/PCC byte: which is a byte used for automatic protection switching and protecting communication channel;
a JC byte: which is a bit rate justification control byte;
a PSI byte: which is a payload structure identifier byte;
an NJO byte: which is a byte used for positive bit rate justification; and
a PJO byte: which is a byte used for negative bit rate justification.

It should be noted that, the GCC0 byte to the GCC2 byte are special bytes that are in the OTN overhead and that are used to transfer general communication channel information. In an actual OTN device, these bytes are usually reserved and unused. In addition, the OTN further includes another reserved and unused overhead byte, for example, an RES byte. It can be seen from FIG. 4 that, the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame. However, there is an RES byte in each of the OTU overhead byte, the ODU overhead byte, and the OPU byte. When an encryption solution in the prior art is used for performing encryption, after an OTN frame is received at a transmit end, because the OTN frame includes an OPU divided into a plurality of timeslots, the timeslots are grouped into a plurality of timeslot blocks, two or more timeslot blocks are selected to be encrypted, and encryption and authentication are concurrently performed to generate an encrypted OTN frame, where only some timeslot blocks in the encrypted OTN frame are encrypted.

A minimum unit of the OPU unit is an ODU0, and an OTN device can only use the minimum unit as a whole to perform encryption and decryption processing, where an ODU0 rate is 1.25 Gbp/s. The data rate is very high and a continuous transmission service is performed, and the data rate is far higher than a rate at which an existing quantum key distribution system can generate a key. Therefore, the ODU0 cannot be encrypted by using a quantum key in combination with a one-time-pad encryption algorithm. Therefore, to encrypt the optical channel payload unit, only a conventional encryption method can be selected. As a result, unconditional security of encrypted service data cannot be ensured; and encryption processing of highly confidential service data cannot be implemented. Therefore, the present invention provides a new encryption solution including encrypting to-be-encrypted service data by using a quantum key, to generate a ciphertext; and inserting the ciphertext into a specified byte in an OTN overhead byte, where preferably, the specified byte is a GCC0 byte to a GCC2 byte; performing encapsulation to obtain an OTN frame including the ciphertext; and converting the OTN frame from an electrical signal to an optical signal, and transmitting the optical signal to another device. In this way, because one-time-pad encryption is performed on the service data by using the quantum key, unconditional security of a key can be ensured. Therefore, unconditional security of the encrypted service data can be ensured, and encryption processing of highly confidential service data can also be implemented.

Specifically, when the encrypted ciphertext is inserted into the specified byte in the OTN overhead byte, preferably, the ciphertext is inserted into one or more bytes of the GCC0 byte to the GCC2 byte in the OTN overhead byte, where the GCC0 byte to the GCC2 byte are in the OTN overhead and used to transfer general communication information. In an actual OTN device, these bytes are usually reserved and unused. When the GCC0 byte to the GCC2 byte are used, a ciphertext transfer rate that can be supported is highest, where for an OTU2 service, maximum rates supported by a GCC0 overhead, a GCC1 overhead, and a GCC2 overhead are all 1.3 Mbp/s, and a maximum rate supported by the GCC0 byte overhead to the GCC2 byte overhead is 3.9 Mbp/s. This can satisfy a transfer requirement of a confidential call, a relatively low definition confidential video, a confidential document, a confidential control instruction, or another key or password. For transfer of a high definition confidential video, a manner of connecting an OTU4, an OTUC2, an OTUC4 or a plurality of OTU2s, and an OTU3s in parallel is used to satisfy a transfer requirement.

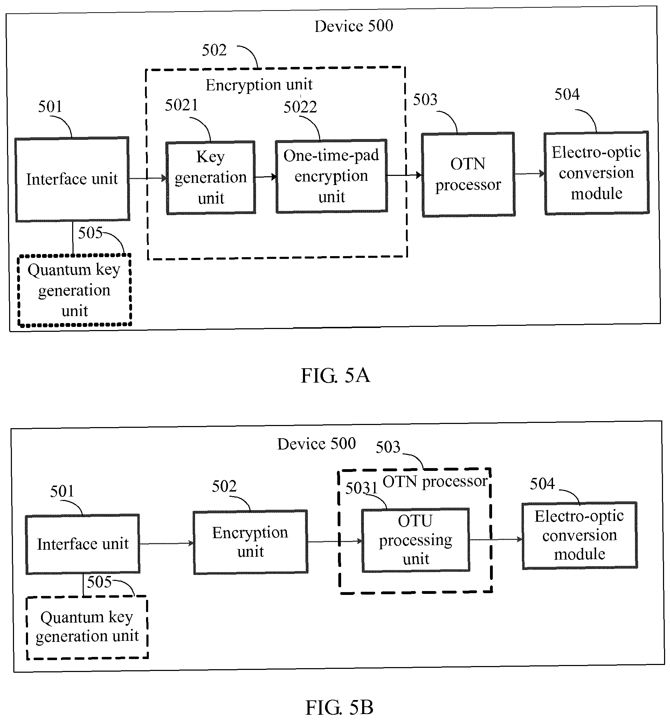

FIG. 5A is a schematic structural diagram of an example of an encryption device according to an embodiment of the present invention.

Based on the foregoing network architecture and relevant description, as shown in FIG. 5A, the encryption device 500 provided in this embodiment of the present invention includes:
an interface unit 501, configured to obtain a quantum key and to-be-encrypted service data;
an encryption unit 502, configured to encrypt the to-be-encrypted service data by using the quantum key, to generate a ciphertext;
an OTN processor 503, configured to insert the ciphertext into a specified byte in an OTN overhead byte, and perform encapsulation to obtain an OTN frame including the ciphertext; and
an electro-optic conversion module 504, configured to convert the OTN frame from an electrical signal to an optical signal, and transmit the optical signal to a receiving device.

Optionally, the encryption unit 502 is specifically configured to encrypt the to-be-encrypted service data by using a one-time-pad encryption algorithm and the quantum key, to generate the ciphertext.

Optionally, the encryption unit 502 includes a one-time-pad encryption unit 5022 and a key generation unit 5021; where
the key generation unit 5021 is configured to perform code extension processing on the quantum key to generate a new key, or perform reuse processing on the quantum key to generate a new key; and
the one-time-pad encryption unit 5022 is configured to encrypt the to-be-encrypted service data by using a one-time-pad encryption algorithm and the new key, to generate the ciphertext.

Optionally, the specified byte in the OTN overhead byte is a specified byte in an OPU overhead byte, a specified byte in an ODU overhead byte, or a specified byte in an OTU overhead byte.

Optionally, the specified byte in the ODU overhead byte is a general communication channel byte in the ODU overhead byte; and the specified byte in the OTU overhead byte is a general communication channel byte in the OTU overhead byte.

Optionally, the specified byte in the ODU overhead byte is a GCC1 byte and a GCC2 byte, and the specified byte in the OTU overhead byte is a GCC0 byte.

Optionally, the GCC1 byte is located in the first column and the second column of the fourth row in the OTN frame; the GCC2 byte is located in the third column and the fourth column of the fourth row in the OTN frame; the GCC0 byte is located in the eleventh column and the twelfth column of the first row in the OTN frame; and the GCC0 byte is located in the eleventh column and the twelfth column of the first row in the OTN frame.

Optionally, the specified byte is a reserved byte of the OPU overhead byte, the ODU overhead byte, or the OTU overhead byte, and the reserved byte is an RES byte.

Optionally, the interface unit 501 is specifically configured to receive the quantum key sent by another quantum key distribution device.

Optionally, the device 500 further includes a quantum key generation unit 505 configured to generate a quantum key and send the quantum key to the interface unit 501.

In a possible implementation, referring to FIG. 5B, the OTN processor 503 includes an OTU processing unit 5031, configured to insert the ciphertext into the specified byte in the OPU overhead byte, the specified byte in the ODU overhead byte, or the specified byte in the ODU overhead byte, and perform encapsulation to obtain the OTN frame including the ciphertext.

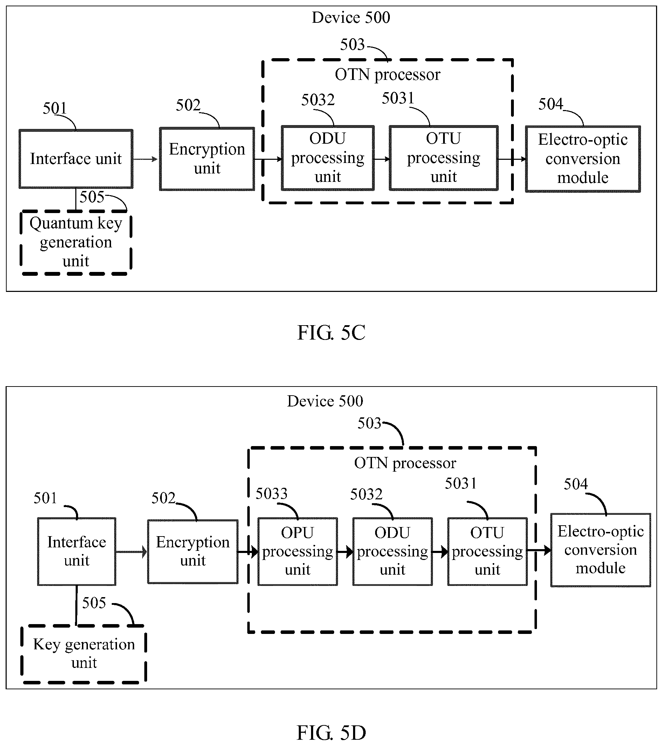

In a possible implementation, referring to FIG. 5C, the OTN processor 503 includes an OTU processing unit 5031 and an ODU processing unit 5032, where
the ODU processing unit 5032 is configured to insert the ciphertext into the specified byte in the ODU overhead byte or the specified byte in the OPU overhead byte, and output an obtained ODU unit to the OTU processing unit 5031; and
the OTU processing unit 5031 is configured to encapsulate the ODU unit into the OTN frame including the ciphertext.

In a possible implementation, referring to FIG. 5D, the OTN processor includes an OTU processing unit 5031, an ODU processing unit 5032, and an OPU processing unit 5033, where
the OPU processing unit 5033 is configured to insert the ciphertext into the specified byte in the OPU overhead byte, and output an obtained OPU unit to the ODU processing unit 5032;
the ODU processing unit 5032 is configured to perform processing on the OPU unit to obtain an ODU unit, and output the ODU unit to the OTU processing unit 5031; and
the OTU processing unit 5031 is configured to encapsulate the OPU unit into the OTN frame including the ciphertext.

Optionally, the to-be-encrypted service data is any one or a combination of the following: a confidential call, a confidential video, a confidential document, confidential control instruction, and a key or a password.

It can be learned from the foregoing content that, in this embodiment of the present invention, the encryption device can encrypt the to-be-encrypted service data by using the obtained quantum key, to generate the ciphertext; insert the ciphertext into the specified byte in the OTN overhead byte; perform encapsulation to obtain the OTN frame including the ciphertext; and perform electro-optic conversion on the OTN frame, and transmit the OTN frame having undergone electro-optic conversion. The to-be-encrypted service data is encrypted by using the quantum key, and therefore security of service data transmission is ensured. Further, the ciphertext is encapsulated in the specified byte in the OTN overhead byte, and therefore encryption transmission of a highly confidential service can be implemented.

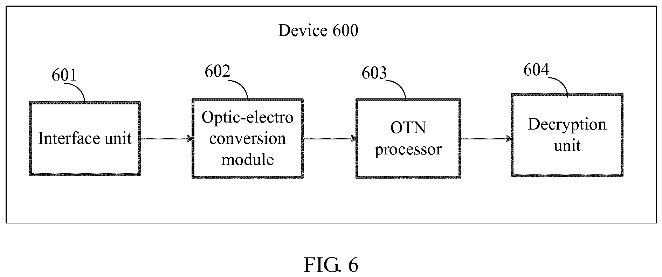

FIG. 6 is a schematic structural diagram of an example of a decryption device according to an embodiment of the present invention.

As shown in FIG. 6, the decryption device 600 provided in this embodiment of the present invention includes:
an interface unit 601, configured to receive an optical signal that includes a ciphertext and that is sent by a sending device;
an optic-electro conversion module 602, configured to convert the optical signal to an electrical signal to obtain an optical transport network OTN frame including the ciphertext;
an OTN processor 603, configured to extract the ciphertext from a specified byte in an OTN overhead byte of the OTN frame, and output the ciphertext to a decryption unit; and
the decryption unit 604, configured to perform decryption processing on the extracted ciphertext by using an encryption algorithm and a quantum key that are obtained by the sending device, to obtain service data that has not undergone encryption processing.

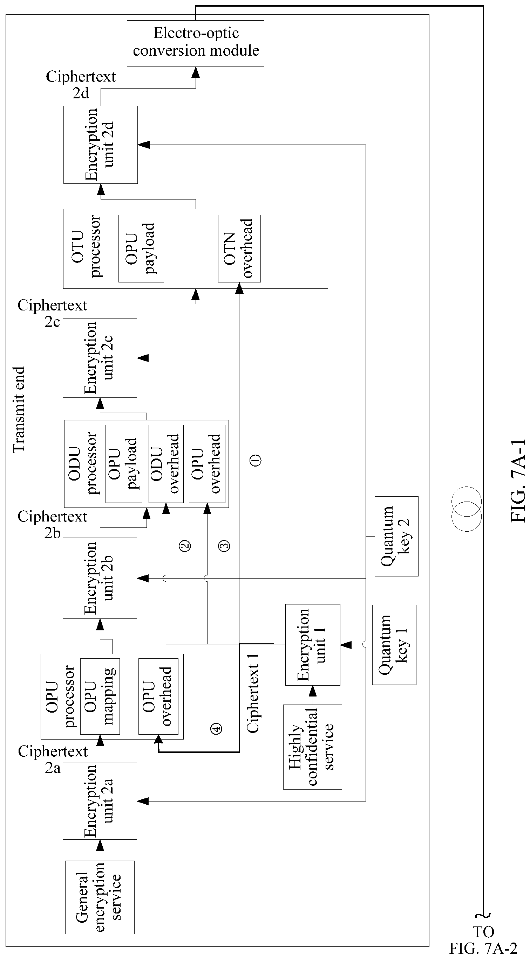

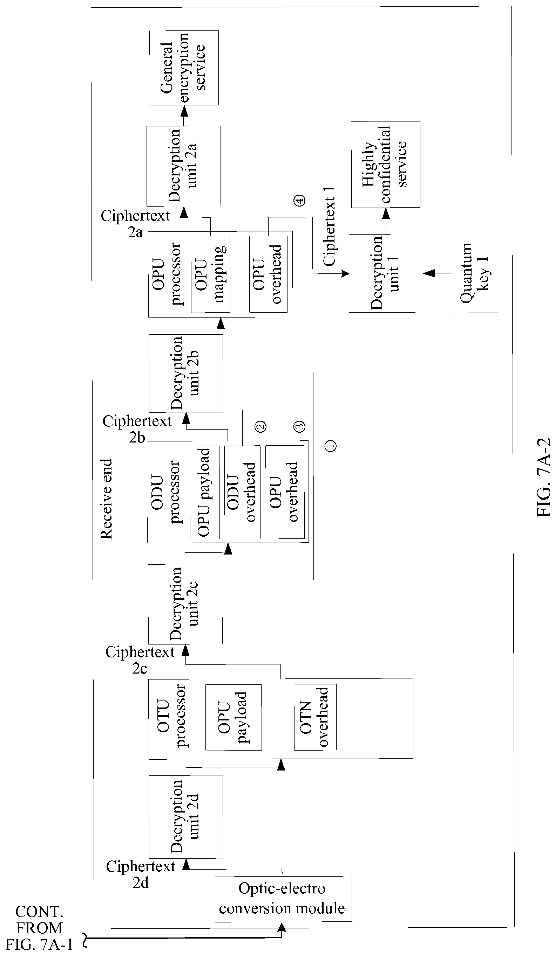

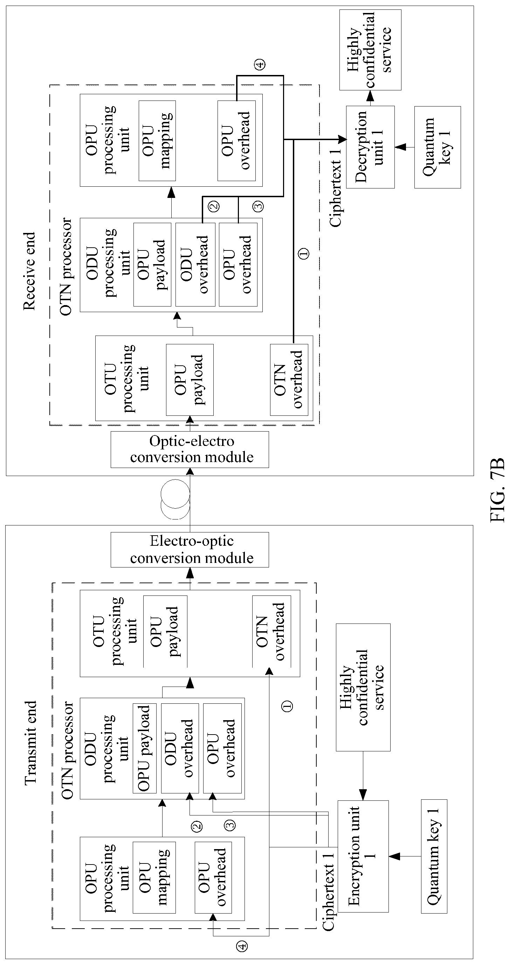

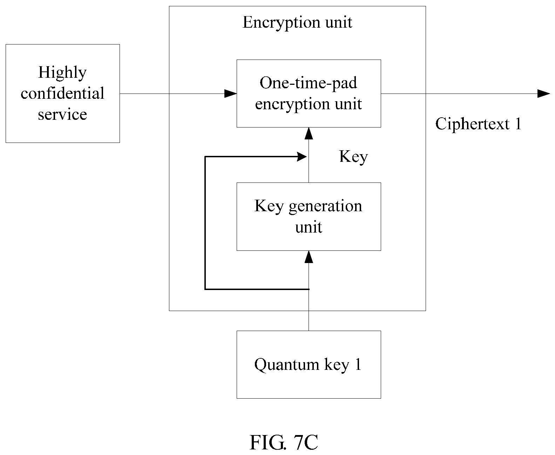

Based on the foregoing embodiments, an embodiment of the present invention provides an encryption/decryption system, where the encryption/decryption system includes a transmit end and a receive end, the transmit end is the foregoing encryption device 500, and the receive end is the foregoing decryption device 600. Specifically, for an encryption and decryption processing procedure, refer to FIG. 7A1-1, FIG. 7A1-2, FIG. 7B, and FIG. 7C.

It can be learned from FIG. 7A1-1 and FIG. 7A1-2 that, the system cannot only implement an encryption/decryption process of a general service, more importantly, it can also implement an encryption/decryption process of a highly confidential service.

An encryption processing procedure implemented by the transmit end for highly confidential service data is as follows: An encryption unit 1 reads in the highly confidential service data and a quantum key 1 by using an interface unit, completes service data encryption by using the quantum key 1, and outputs a ciphertext 1; an OTN processor inserts the encrypted ciphertext into a specified overhead byte in an OTN frame, and performs encapsulation to obtain a complete OTN frame; and an electro-optic conversion module converts, to an optical signal, the OTN frame output by the OTN processor, and transmits the optical signal to the receive end through an optical fiber. The optical signal is transmitted to the receive end.

Specifically, the encrypted ciphertext may be inserted into the specified overhead byte in the OTN frame in the following four modes:

In an encryption mode 1, an OTU processing unit in the OTN processor reads in the ciphertext 1, inserts the ciphertext 1 into a specified byte in an OPU overhead byte, a specified byte in an ODU overhead byte, or a specified byte in an ODU overhead byte, and generates the complete OTN frame.

In an encryption mode 2, an ODU processing unit in the OTN processor reads in the ciphertext 1, inserts the ciphertext 1 into a specified byte in an ODU overhead byte, and outputs an ODU unit to an OTU processing unit; and the OTU processing unit continues to implement the following procedure.

In an encryption mode 3, an ODU processing unit in the OTN processor reads in the ciphertext 1, inserts the ciphertext 1 into a specified byte in an OPU overhead byte, and outputs an obtained ODU unit to an OTU processing unit; and the OTU processing unit continues to implement the following procedure.

In an encryption mode 4, an OPU processing unit in the OTN processor reads in the ciphertext 1, inserts the ciphertext 1 into a specified byte in an OPU overhead byte, and outputs an obtained OPU unit to an ODU processing unit; and the ODU processing unit continues to implement the following procedure.

A general encryption service may be one or more of a synchronous digital hierarchy (Synchronous Digital Hierarchy, SDH) service, a synchronous optical network (Synchronous Optical Network, SONET) service, an Ethernet service, an OTN service, a fiber channel (Fiber Channel) service, an ATM service, and the like that are from another device. Herein, an encryption unit 2 is used for implementing encryption processing of the general service.

Specifically, an encryption processing procedure implemented by the encryption unit 2 in the transmit end for general confidential service data is as follows: The general confidential service data is usually encrypted by using a specific encryption algorithm, such as the Advanced Encryption Standard (Advanced Encryption Standard, AES), the Data Encryption Standard (Data Encryption Standard, DES), or the Triple Data Encryption Standard (Triple DES, 3DES). Alternatively, the service data is encrypted at different service processing nodes in an OTN device by using a quantum key 2 as a key of an encryption algorithm; and after the processing, an electro-optic conversion module converts, to an optical signal, an OTN frame output by the OTN processor, and transmits the optical signal to the receive end through an optical fiber.

Specifically, for encrypting the service data at the different service processing nodes in the OTN device, there are the following four cases:
In an encryption case 1, the original input service data is encrypted by using an encryption unit 2a before the service data is input to the OPU processing unit.

In an encryption case 2, after the OPU processing unit performs processing, an output OPU unit is encrypted by using an encryption unit 2b.

In an encryption case 3, after the ODU processing unit performs processing, an output ODU unit is encrypted by using an encryption unit 2c.

In an encryption case 4, after the OTU processing unit performs processing, an output OTU unit is encrypted by using an encryption unit 2d.

It should be noted that, the foregoing encryption units 2a to 2d are provided only for distinguishing different encryption locations. In an actual application, encryption is usually performed only at one processing node, that is, only one encryption case is selected to perform encryption. Preferably, an output OPU unit is encrypted after the OPU processing unit performs processing.

Correspondingly, an optic-electro conversion module in the receive end converts the input optical signal to an electrical signal, restores the OTN frame, and outputs the OTN frame to an OTN processor. Optionally, the OTN processor includes an OTU processing unit, an ODU processing unit, and an OPU processing unit.

For decryption of the highly confidential service data, based on a byte location into which the encrypted ciphertext is inserted and that is in the specified byte in the OTN overhead byte, the OTN processor may use the following manners to extract the ciphertext 1.

In a decryption mode 1, specific to the foregoing encryption mode 1, the OTU processing unit in the OTN processor reads in the OTN frame, extracts the ciphertext 1 from the specified byte in the OPU overhead byte, the specified byte in the ODU overhead byte, or the specified byte in the ODU overhead byte, and outputs the ciphertext 1 to a decryption unit.

In a decryption mode 2, specific to the foregoing encryption mode 2, the ODU processing unit in the OTN processor reads in the ODU unit, extracts the ciphertext 1 from the specified byte in the ODU overhead byte, and outputs the ciphertext 1 to the decryption unit.

In a decryption mode 3, specific to the foregoing encryption mode 3, the ODU processing unit in the OTN processor reads in the ODU unit, extracts the ciphertext 1 from the specified byte in the OPU overhead byte, and outputs the ciphertext 1 to the decryption unit.

In a decryption mode 4, specific to the foregoing encryption mode 4, the OPU processing unit in the OTN processor reads in the ODU unit, extracts the ciphertext 1 from the specified byte in the OPU overhead byte, and outputs the ciphertext 1 to the decryption unit.

The decryption unit reads the ciphertext 1 and the quantum key that is used in the encryption process, and outputs the highly confidential service data after completing ciphertext decryption.

For decryption of the general confidential service data, a decryption unit 2 needs to perform decryption processing by using an inverse process corresponding to encryption processing, an encryption algorithm used for decryption needs to be exactly the same as the key used for encryption.

Specifically, if the transmit end uses the encryption unit 2a to perform encryption, the receive end uses a decryption unit 2a to perform decryption; if the transmit end uses the encryption unit 2b to perform encryption, the receive end uses a decryption unit 2b to perform decryption; if the transmit end uses the encryption unit 2c to perform encryption, the receive end uses a decryption unit 2c to perform decryption; and if the transmit end uses the encryption unit 2d to perform encryption, the receive end uses a decryption unit 2d to perform decryption. Details are not described herein.

FIG. 7B is an encryption/decryption process only for a highly confidential service, and the process is exactly the same as the encryption/decryption process of the highly confidential service in FIG. 7A1-1 and FIG. 7A1-2. Details are not described herein.

FIG. 7C is a schematic diagram of a principle for encrypting, by an encryption unit, obtained highly confidential service data by using a quantum key. Optionally, the encryption unit includes a one-time-pad encryption unit and a key generation unit. In a possible implementation, the key generation unit performs code extension processing or reuse processing on the obtained quantum key to generate a new key, and transmits the new key to the one-time-pad encryption unit; and the one-time-pad encryption unit encrypts the highly confidential service data by using the new key, to generate a ciphertext 1. In another possible implementation, the one-time-pad encryption unit directly obtains the quantum key, and encrypts the highly confidential service data by using the quantum key, to generate a ciphertext 1, and in this case, the key generation unit may not exist.

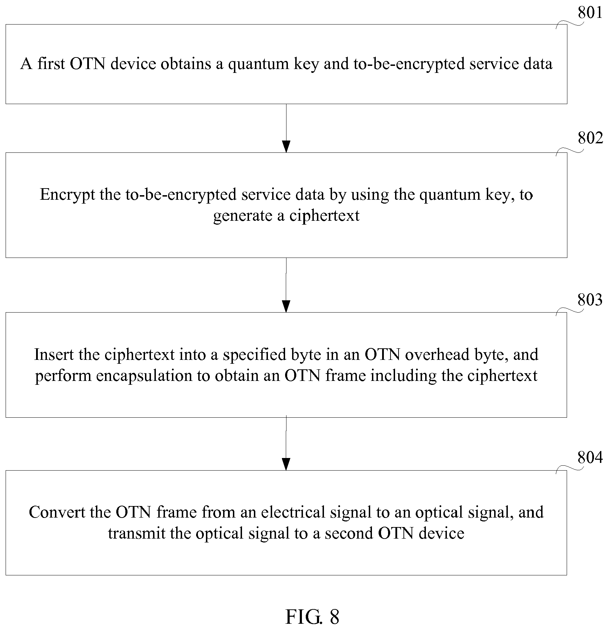

FIG. 8 is a schematic flowchart of an example of an encryption method according to an embodiment of the present invention.

Based on a same conception, this embodiment of the present invention provides an encryption method, where the encryption method is implemented by a first OTN device. The first OTN device may be the foregoing encryption device or transmit end. As shown in FIG. 8, the encryption method includes the following steps:
Step 801. The first OTN device obtains a quantum key and to-be-encrypted service data.
Step 802. Encrypt the to-be-encrypted service data by using the quantum key, to generate a ciphertext.
Step 803. Insert the ciphertext into a specified byte in an OTN overhead byte, and perform encapsulation to obtain an OTN frame including the ciphertext.
Step 804. Convert the OTN frame from an electrical signal to an optical signal, and transmit the optical signal to a second OTN device.

Specifically, the encrypting the to-be-encrypted service data by using the quantum key, to generate a ciphertext includes the following three implementations.

In a first implementation, the to-be-encrypted service data is encrypted by using a one-time-pad encryption algorithm and the quantum key, to generate the ciphertext.

For example, service data of 1024 bits or shorter is encrypted by using a quantum key string of 1024 bits in combination with the one-time-pad algorithm.

In a second implementation, code extension processing is performed on the quantum key to generate a new key, and the to-be-encrypted service data is encrypted by using a one-time-pad encryption algorithm and the new key, to generate the ciphertext.

For example, four-time code extension processing is performed on a quantum key string of 256 bits, a key string of 1024 bits may be generated. In this case, service data of 1024 bits or shorter is encrypted by using the one-time-pad algorithm.

In a third implementation, reuse processing is performed on the quantum key to generate a new key, and the to-be-encrypted service data is encrypted by using a one-time-pad encryption algorithm and the new key, to generate the ciphertext.

For example, a quantum key string of 256 bits is reused for four times, and a key string of 1024 bits may be generated. In this case, service data of 1024 bits or shorter may also be encrypted.

Optionally, the specified byte in the OTN overhead byte is a specified byte in an optical channel payload unit OPU overhead byte, a specified byte in an optical channel data unit ODU overhead byte, or a specified byte in an optical channel data unit OTU overhead byte.

Optionally, the specified byte in the ODU overhead byte is a general communication channel byte in the ODU overhead byte; and the specified byte in the OTU overhead byte is a general communication channel byte in the OTU overhead byte.

Optionally, the specified byte in the ODU overhead byte is a GCC1 byte and a GCC2 byte, and the specified byte in the OTU overhead byte is a GCC0 byte.

Optionally, the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame.

Optionally, the specified byte in the OTN overhead byte is a reserved byte of the OPU overhead byte, the ODU overhead byte, or the OTU overhead byte, and the reserved byte is an RES byte.

Specifically, the first OTN device obtains the quantum key in the following two manners:

In a first manner, the first OTN device generates the quantum key.

In a second manner, the first OTN device receives, by using an interface unit of the first OTN device, the quantum key distributed by another quantum key distribution device.

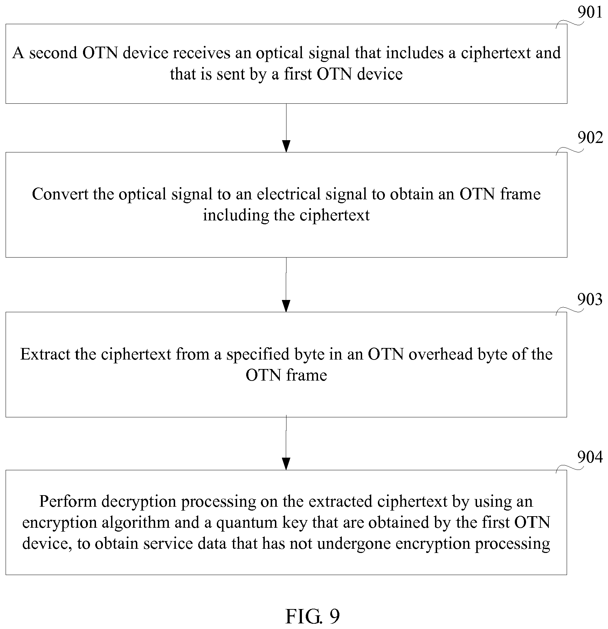

Based on a same conception, this embodiment of the present invention provides a decryption method, where the decryption method is implemented by a second OTN device. The second OTN device may be the foregoing decryption device or receive end. As shown in FIG. 9, the decryption method includes the following steps:
Step 901. The second OTN device receives an optical signal that includes a ciphertext and that is sent by a first OTN device.
Step 902. Convert the optical signal to an electrical signal to obtain an OTN frame including the ciphertext.
Step 903. Extract the ciphertext from a specified byte in an OTN overhead byte of the OTN frame.
Step 904. Perform decryption processing on the extracted ciphertext by using an encryption algorithm and a quantum key that are obtained by the first OTN device, to obtain service data that has not undergone encryption processing.

It can be learned from the foregoing content that, in this embodiment of the present invention, the first OTN device obtains the quantum key and the to-be-encrypted service data; encrypts the to-be-encrypted service data by using the quantum key, to generate the ciphertext; inserts the ciphertext into the specified byte in the OTN overhead byte, and performs encapsulation to obtain the OTN frame including the ciphertext; converts the OTN frame from the electrical signal to the optical signal, and transmits the optical signal to the second OTN device, so that the second OTN device can extract the corresponding ciphertext based on a location into which the ciphertext is inserted and that is in the OTN overhead byte. The service data is encrypted by using the quantum key, and therefore unconditional security of service data transmission is ensured. In addition, the ciphertext is inserted into the specified byte in the OTN overhead byte, and therefore encryption processing of a highly confidential service can be implemented.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the embodiments of the present invention without departing from the spirit and scope of the embodiments of the present invention. The present invention is intended to cover these modifications and variations provided that they fall within the scope of protection defined by the following claims and their equivalent technologies.

## Claims

1. An encryption device, comprising:
an interface unit, configured to obtain a quantum key and to-be-encrypted service data;
an encryption unit, configured to encrypt the to-be-encrypted service data by using the quantum key, to generate a ciphertext;
an optical transport network OTN processor, configured to insert the ciphertext into a specified byte in an OTN overhead byte, and perform encapsulation to obtain an OTN frame comprising the ciphertext; and
an electro-optic conversion module, configured to convert the OTN frame from an electrical signal to an optical signal, and transmit the optical signal to a receiving device.

2. The device according to claim 1, wherein the encryption unit is specifically configured to:
encrypt the to-be-encrypted service data by using a one-time-pad encryption algorithm and the quantum key, to generate the ciphertext.

3. The device according to claim 1, wherein the encryption unit comprises a one-time-pad encryption unit and a key generation unit, wherein
the key generation unit is configured to perform code extension processing on the quantum key to generate a new key, or perform reuse processing on the quantum key to generate a new key; and
the one-time-pad encryption unit is configured to encrypt the to-be-encrypted service data by using a one-time-pad encryption algorithm and the new key, to generate the ciphertext.

4. The device according to any one of claims 1 to 3, wherein the specified byte in the OTN overhead byte is a specified byte in an optical channel payload unit OPU overhead byte, a specified byte in an optical channel data unit ODU overhead byte, or a specified byte in an optical channel data unit OTU overhead byte.

5. The device according to claim 4, wherein the specified byte in the ODU overhead byte is a general communication channel byte in the ODU overhead byte, and the specified byte in the OTU overhead byte is a general communication channel byte in the OTU overhead byte.

6. The device according to claim 4 or 5, wherein the specified byte in the ODU overhead byte is a GCC1 byte and a GCC2 byte, and the specified byte in the OTU overhead byte is a GCC0 byte.

7. The device according to claim 6, wherein the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame.

8. The device according to claim 4, wherein the specified byte in the OTN overhead byte is a reserved byte in the OPU overhead byte, the ODU overhead byte, or the OTU overhead byte, and the reserved byte is an RES byte.

9. The device according to any one of claims 4 to 8, wherein the OTN processor comprises an OTU processing unit, configured to insert the ciphertext into the specified byte in the OPU overhead byte, the specified byte in the ODU overhead byte, or the specified byte in the OTU overhead byte, and perform encapsulation to obtain the OTN frame comprising the ciphertext.

10. The device according to any one of claims 4 to 8, wherein the OTN processor comprises an OTU processing unit and an ODU processing unit, wherein
the ODU processing unit is configured to insert the ciphertext into the specified byte in the ODU overhead byte or the specified byte in the OPU overhead byte, and output an obtained ODU unit to the OTU processing unit; and
the OTU processing unit is configured to encapsulate the ODU unit into the OTN frame comprising the ciphertext.

11. The device according to any one of claims 4 to 8, wherein the OTN processor comprises an OTU processing unit, an ODU processing unit, and an OPU processing unit, wherein
the OPU processing unit is configured to insert the ciphertext into the specified byte in the OPU overhead byte, and output an obtained OPU unit to the ODU processing unit;
the ODU processing unit is configured to perform processing on the OPU unit to obtain an ODU unit, and output the ODU unit to the OTU processing unit; and
the OTU processing unit is configured to encapsulate the ODU unit into the OTN frame comprising the ciphertext.

12. An encryption method, comprising:
obtaining, by a first optical transport network OTN device, a quantum key and to-be-encrypted service data;
encrypting the to-be-encrypted service data by using the quantum key, to generate a ciphertext;
inserting the ciphertext into a specified byte in an OTN overhead byte, and performing encapsulation to obtain an OTN frame comprising the ciphertext; and
converting the OTN frame from an electrical signal to an optical signal, and transmitting the optical signal to a second OTN device.

13. The method according to claim 12, wherein the encrypting the to-be-encrypted service data by using the quantum key, to generate a ciphertext comprises:
encrypting the to-be-encrypted service data by using a one-time-pad encryption algorithm and the quantum key, to generate the ciphertext;
performing code extension processing on the quantum key to generate a new key, and encrypting the to-be-encrypted service data by using a one-time-pad encryption algorithm and the new key, to generate the ciphertext; or
performing reuse processing on the quantum key to generate a new key, and encrypting the to-be-encrypted service data by using a one-time-pad encryption algorithm and the new key, to generate the ciphertext.

14. The method according to claim 12 or 13, wherein the specified byte in the OTN overhead byte is a specified byte in an optical channel payload unit OPU overhead byte, a specified byte in an optical channel data unit ODU overhead byte, or a specified byte in an optical channel data unit OTU overhead byte.

15. The method according to claim 14, wherein the specified byte in the ODU overhead byte is a general communication channel byte in the ODU overhead byte; and the specified byte in the OTU overhead byte is a general communication channel byte in the OTU overhead byte.

16. The method according to claim 14 or 15, wherein the specified byte in the ODU overhead byte is a GCC1 byte and a GCC2 byte, and the specified byte in the OTU overhead byte is a GCC0 byte.

17. The method according to claim 16, wherein the GCC1 byte is located in the first column and the second column of the fourth row in the OTN frame; the GCC2 byte is located in the third column and the fourth column of the fourth row in the OTN frame; and the GCC0 byte is located in the eleventh column and the twelfth column of the first row in the OTN frame.

18. The method according to claim 14, wherein the specified byte in the OTN overhead byte is a reserved byte of the OPU overhead byte, the ODU overhead byte, or the OTU overhead byte, and the reserved byte is an RES byte.

19. A decryption method, comprising:
receiving, by a second optical transport network OTN device, an optical signal that comprises a ciphertext and that is sent by a first OTN device;
converting the optical signal to an electrical signal to obtain an OTN frame comprising the ciphertext;
extracting the ciphertext from a specified byte in an OTN overhead byte of the OTN frame; and
performing decryption processing on the extracted ciphertext by using an encryption algorithm and a quantum key that are obtained by the first OTN device, to obtain service data that has not undergone encryption processing.

20. A decryption device, comprising:
an interface unit, configured to receive an optical signal that comprises a ciphertext and that is sent by a sending device;
an optic-electro conversion module, configured to convert the optical signal to an electrical signal to obtain an optical transport network OTN frame comprising the ciphertext;
an OTN processor, configured to extract the ciphertext from a specified byte in an OTN overhead byte of the OTN frame, and output the ciphertext to a decryption unit; and
the decryption unit, configured to perform decryption processing on the extracted ciphertext by using an encryption algorithm and a quantum key that are obtained by the sending device, to obtain service data that has not undergone encryption processing.
